# EUROPÄISCHE PATENTANMELDUNG

(11) **EP 4 492 172 A1**
(43) Veröffentlichungstag der Anmeldung: **15.01.2025**
(21) Anmeldenummer: 23184796.3
(22) Anmeldetag: 11.07.2023
(51) Int. Cl.: G05B 19/418, G06F 9/48

(54) **VERFAHREN UND EINE ANORDNUNG ZUR VERTEILUNG VON ANWENDUNGEN UND ZUR KONFIGURATION VON KOMMUNIKATIONSVERBINDUNGEN IN EINER VERTEILTEN INDUSTRIELLEN AUTOMATISIERUNGSANORDNUNG**

(71) Anmelder: Siemens Aktiengesellschaft, 80333 München (DE)
(72) Erfinder: Hausner, Alexander, 91085 Weisendorf (DE); Höfler, Bernd, 91074 Herzogenaurach (DE); Lösch, Felix, 91468 Gutenstetten (DE)
(74) Vertreter: Siemens Patent Attorneys

(57) **Zusammenfassung**

Die Erfindung betrifft ein Verfahren und eine Anordnung zur Verteilung von Anwendungen (F1, ..., F5) und zur Konfiguration von Kommunikationsverbindungen (K1, ..., K4) in einer verteilten industriellen Automatisierungsanordnung mit einer Anzahl vernetzter Hardware-Ressourcen für die Anwendungen (F1, ..., F5) und Kommunikations-Ressourcen für die Kommunikationsverbindungen (K1, ..., K4), wobei eine Gesamtstrecke aus einer Anzahl von Teilstrecken aus den Anwendungen (F1, ..., F5) und Kommunikationsverbindungen (K1, ..., K4) gebildet wird, wobei die Gesamtstrecke von einem Datensignal durchlaufen wird, und wobei für einen Durchlauf des Datensignals durch die Gesamtstrecke ein Grenzwert einer Kenngröße, insbesondere eine maximale Ausführungs- oder Reaktionszeit, vorgegeben ist. Dabei werden die aktuellen Werte der Kenngröße für zumindest einen Durchlauf des Datensignals auf der Gesamtstrecke und zumindest einer der Teilstrecken registriert, wonach die Leistungsdaten zumindest eines Teils der Hardware-Ressourcen und/oder der Kommunikations-Ressourcen ermittelt werden, und wonach zumindest in dem Fall, in dem zumindest ein tatsächlicher Wert den jeweiligen Grenzwert verfehlt, die Verteilung der Anwendungen (F1, ..., F5) auf die Hardware-Ressourcen und/oder der Kommunikationsverbindungen (K1, ..., K4) auf die Kommunikationsressourcen neu organisiert wird. Dadurch wird das Deployment unterstützt und dynamisch die Einhaltung von Kenngrößen und Constraints durch Re-Organisation des Deployments sichergestellt.

## Beschreibung

In der Automatisierungsindustrie werden maßgebliche Kenngrö-ßen oder Kriterien zur Auslegung, Konfiguration und Betrieb der dort zur Anwendung kommenden Echtzeitsysteme verwendet, beispielsweise die maximal erlaubte Ausführungszeit (im Folgenden auch "Deadline" genannt). Diese muss bei "harten" Echtzeitsystemen immer eingehalten werden, um Schaden an Maschinen und den produzierten Gütern zu vermeiden. Bei "weichen" Echtzeitsystemen nimmt der Wert des Ergebnisses (Qualität, Performance) nach Überschreiten der Deadline sukzessive ab. Deshalb ist in Echtzeitsystemen die Vorhersagbarkeit der Ausführungszeit einer Anwendung essenziell zur Dimensionierung des Systems.

Die Ausführungszeit einer Anwendung kann einerseits durch eine theoretische Analyse abgeschätzt werden, die sehr aufwändig und dadurch in den meisten Fällen unwirtschaftlich ist. Andererseits kann die Dimensionierung auch während der Inbetriebnahme eines Systems experimentell bestimmt werden. Diese experimentelle Methode erfordert Kenntnisse über die Anwendungslogik (z.B. Anwendungsteile, die nicht immer durchlaufen werden) und Kenntnisse über das System (z.B. Ausführung anderer Anwendungen auf einer Hardware und Hardwareeigenschaften) .

Gründe für den hohen Aufwand (s. oben genannte Punkte) sind, dass Zeit für die Systemanalyse investiert werden muss, oder anderenfalls müssen die Systeme häufig deutlich größer ausgelegt werden, als notwendig (Erhöhter Aufwand bei Hardware-Beschaffung, Konfiguration, Installation, Inbetriebnahme etc.) Bei Änderungen der Anwendung oder der Hardware-Struktur oder anderer Systembestandteile ist eine erneute Analyse nötig. Bei der Änderung einzelner Parameter (z.B. Prozessgeschwindigkeit) muss ebenfalls eine komplette bzw. teilweise Analyse erfolgen. Bei Änderungen und/oder "Refitting" der existierenden Hardware kann es ebenso zu Veränderungen kommen.

Bisherige Automatisierungssysteme bieten in der Regel keine Garantie dafür, definierte Ausführungszeiten sicher einzuhalten (harte Echtzeit). Bei Steuerungen wird dabei oft ein abgeschottetes System zur Ausführung der Steuerungsprogramme verwendet. In diesem System hat der Anwender keine Möglichkeit, "dritte" Software neben der Automatisierungslösung auszuführen. Dadurch sind die Schwankungen der Ausführungszeiten limitierbar. Wenn trotzdem Teile des Programms nicht in der vorher bestimmten maximalen Zeit (Deadline) ausgeführt werden können, werden Fehler-Routinen aufgerufen. Dadurch hat der Anwender die Möglichkeit, eine Reaktion auf ein Überschreiten der Deadlines zu definieren.

Im Stand der Technik besteht also das Problem, dass die Verteilung von Anwendungen (Software und die Konfigurierung von Kommunikationsverbindungen) in einer bestehenden Hardware-Architektur, also das sogenannte Deployment, so gestaltet werden muss, dass Kenngrößen oder Leistungsgrenzwerte, sogenannte Constraints, sicher eingehalten werden. Zudem besteht im Stand der Technik das Problem, dass bei einer Änderung der Hardware- oder Softwarearchitektur die Einhaltung der Kenngrößen erneut überprüft und das Deployment erforderlichenfalls angepasst werden muss. Diese Vorgänge sind im Stand der Technik aufwendig und fehleranfällig. Zudem erfordert das Anpassen des Deployments in der Regel eine hohe Expertise der damit betrauten Fachleute.

Die Kernidee der erfindungsgemäßen Lösung dieser Aufgabe ist es, die Aufteilung bzw. Verteilung der Anwendungslogik (kurz: Anwendungen) und der zur Vernetzung der Anwendungen benötigten Kommunikationskanäle oder -verbindungen auf die zur Verfügung stehende Hardware (Hardware-Ressourcen, Kommunikations-Ressourcen) zu automatisieren und dadurch Zeit und Risiko für den Anwender zu reduzieren und eine vorher spezifizierte Anforderung (Deadline oder dgl.) zu überwachen, um ggf. das Deployment zu optimieren.

Die Aufgabe wird insbesondere durch ein Verfahren gemäß Patentanspruch 1 und durch eine Anordnung gemäß Patentanspruch 9 gelöst.

Dabei wird ein Verfahren zur Verteilung von Anwendungen und zur Konfiguration von Kommunikationsverbindungen in einer verteilten industriellen Automatisierungsanordnung mit einer Anzahl vernetzter Hardware-Ressourcen für die Anwendungen und Kommunikations-Ressourcen für die Kommunikationsverbindungen vorgeschlagen, wobei eine Gesamtstrecke zwischen einem ersten Steuerelement, insbesondere einem Sensor, und einem zweiten Steuerelement, insbesondere einem Aktor, aus einer Anzahl Anwendungen auf den Hardware-Ressourcen und den Kommunikationsverbindungen auf den Kommunikations-Ressourcen gebildet wird, wobei die Gesamtstrecke aus einer Anzahl von Teilstrecken aus den Anwendungen und Kommunikationsverbindungen gebildet wird, wobei die Gesamtstrecke von einem Datensignal durchlaufen wird, und wobei für einen Durchlauf des Datensignals durch die Gesamtstrecke ein Grenzwert einer Kenngröße, insbesondere eine maximale Ausführungs- oder Reaktionszeit, vorgegeben ist. Dabei werden in einem ersten Schritt die aktuellen Werte der Kenngröße für zumindest einen Durchlauf des Datensignals auf der Gesamtstrecke und zumindest einer der Teilstrecken registriert, in einem zweiten Schritt die Leistungsdaten zumindest eines Teils der Hardware-Ressourcen und/oder der Kommunikations-Ressourcen ermittelt, und in einem dritten Schritt wird zumindest in dem Fall, in dem zumindest ein tatsächlicher Wert den jeweiligen Grenzwert überschreitet, die Verteilung der Anwendungen auf die Hardware-Ressourcen und/oder der Kommunikationsverbindungen auf die Kommunikationsressourcen neu organisiert. Durch dieses Verfahren wird das Deployment unterstützt und dynamisch die Einhaltung von Kenngrößen und Constraints durch Re-Organisation des Deployments sichergestellt.

Die Aufgabe wird außerdem durch eine Anordnung zur Ausführung des Verfahrens und entsprechende Computerprogramme bzw. Computerprogrammprodukte gelöst, bei deren Ausführung das Deployment bzw. Re-Deployment automatisch durchgeführt wird. Dabei wird eine Anordnung zur Verteilung von Anwendungen und zur Konfiguration von Kommunikationsverbindungen in einer verteilten industriellen Automatisierung mit einer Anzahl vernetzter Hardware-Ressourcen für die Anwendungen und Kommunikations-Ressourcen für die Kommunikationsverbindungen vorgeschlagen, wobei die Anordnung ein erstes Computerprogramm, insbesondere eine erste Firmware- oder Betriebssystemroutine, zum Zeitstempeln eines Datensignals an einer ersten Komponente der Automatisierungsanordnung umfasst, wobei die Anordnung ein zweites Computerprogramm, insbesondere eine zweite Firmware- oder Betriebssystemroutine, zum Auslesen und Auswerten des Zeitstempel des Datensignals an einer zweiten Komponente der Automatisierungsanordnung umfasst, und wobei die Anordnung ein drittes Computerprogramm, insbesondere eine dritte Firmware- oder Betriebssystemroutine, zur Organisation der Verteilung von Anwendungen und/oder Kommunikationsverbindungen nach dem vorstehend beschriebenen Verfahrens eingerichtet ist. Mit dieser Anordnung können die bereits anhand des Verfahrens diskutierten Vorteile erzielt werden.

Vorteilhafte Ausgestaltungen des erfindungsgemäßen Verfahrens sind in den abhängigen Patentansprüchen angegeben. Die dabei offenbarten Merkmale und deren Vorteile gelten sinngemäß auch für die erfindungsgemäße Anordnung. Vorteilhafte Varianten können sowohl einzeln als auch in sinnfälliger Kombination realisiert werden.

Vorteilhaft wird während eines Betriebs der Automatisierungsanordnung ein absoluter oder ein in Bezug auf die Leistungsdaten relativer Grad der Belegung (Auslastung) zumindest einer der Ressourcen durch die jeweilige Anwendung und/oder die jeweilige Kommunikationsverbindung ermittelt, gelernt oder gespeichert. Anhand dieser Daten kann zum einen der Ressourcenbedarf der jeweiligen Anwendung oder Kommunikationsverbindung abgeschätzt werden, andererseits kann festgestellt werden, an welcher Stelle freie oder freiwerdende Ressourcen zum Verschieben von Prozessen oder Neu-Konfigurieren von Kommunikationsverbindungen bestehen.

Für verschiedene Typen von Hardware-Ressourcen und/oder Kommunikations-Ressourcen können der absolute oder relative Grad der Belegung durch den jeweiligen Typ der Anwendung oder Kommunikationsverbindung jeweils getrennt ermittelt, gelernt oder gespeichert werden. Dadurch kann der Ressourcen-Bedarf der Anwendungen und Kommunikationsverbindungen und -prozesse besser analysiert werden und das Deployment bzw. Re-Deployment besser auf die zur Verfügung stehenden Ressourcen angepasst werden.

In dem dritten Schritt können vorteilhaft für die Neuorganisation die bei einer möglichen oder beabsichtigten Verschiebung einer Anwendung von einer ersten Hardware-Ressource zu einer zweiten Hardware-Ressource oder bei einer möglichen oder beabsichtigten Verschiebung einer Kommunikationsverbindung von einer ersten Kommunikations-Ressource zu einer zweiten Kommunikations-Ressource die dabei jeweils frei werdende Belegung der ersten Hardware-Ressource bzw. der ersten Kommunikations-Ressource für eine mögliche oder beabsichtigte Verschiebung einer dritten Anwendung oder einer dritten Kommunikationsverbindung berücksichtigt werden.

Vorteilhaft werden in dem dritten Schritt eine für die Neuorganisation benötigte Zeit anhand von vorgegebenen Richtwerten oder anhand von ermittelten, gelernten oder gespeicherten Werten für die benötigte Zeit aus vorhergehenden Installationsvorgängen oder Neu-Organisationen für eine Entscheidung darüber verwendet, ob die Neuorganisation während eines Betriebs der Automatisierungsanordnung oder während einer Betriebspause der Automatisierungsanordnung im Lichte einer vorgegebenen maximalen Verzögerung während des laufenden Betriebs stattfinden kann, wonach die Neuorganisation entweder unverzüglich oder erst in einer folgenden Betriebspause erfolgt. Damit kann der Zeitpunkt für das Deployment so eingeplant werden, dass dadurch keine Betriebsstörung auftritt und es möglichst im laufenden Betrieb vorgenommen wird.

In einer Ausgestaltung wird vor einer Anwendung der neuen Organisation der Verteilung der Anwendungen und/oder der Kommunikationsverbindungen der neu zu erwartende Wert für die Kenngröße im Wege der Simulation der Anwendungen und der Kommunikationsverbindungen in Bezug auf einen Ablauf der Anwendungen bzw. der Kommunikationsverbindungen auf den dafür jeweils eingeplanten Hardware-Ressourcen bzw. Kommunikations-Ressourcen simuliert, sodass die Neuorganisation nur bei einer erfolgreichen Simulation in Bezug auf die Einhaltung des Grenzwertes oder der Grenzwerte erfolgt und anderenfalls eine alternative Konfiguration gesucht wird. Vorteilhaft werden bei der Planung des Deployments gemessene Leistungskennzahlen der bislang schon in Betrieb befindlichen Ressourcen verwendet, weil damit auch der Ressourcenbedarf etwaiger Drittsoftware bzw. der Kommunikationsverbindungen anderer Prozesse automatisch berücksichtigt werden.

Dazu können vorteilhaft bei einem oder jedem Betrieb der Kommunikationsanordnung die tatsächlichen Werte für die Durchläufe des Datensignals durch die Gesamtstrecke und durch eine Vielzahl von Teilstrecken jeweils bezogen auf die tatsächlich verwendeten Hardware-Ressourcen bzw. Kommunikations-Ressourcen mittels eines Systems zum Maschinenlernen, insbesondere durch ein neuronales Netz, trainiert werden, wobei das trainierte System zum Maschinenlernen zur Ermittlung einer optimierten Organisation der Anwendungen bzw. Kommunikationsverbindungen auf den aktuell verfügbaren Hardware-Ressourcen bzw. Kommunikations-Ressourcen verwendet wird.

Stehen keine gemessenen Werte bzw. Leistungskennzahlen zur Verfügung, können diese Leistungskennzahlen aus einer Bibliothek, Katalog oder dergleichen verwendet werden, die mit einem Sicherheitsfaktor situationsabhängig herunterskaliert werden, beispielsweise je nach Sicherheitsanforderung der gegenständlichen Anwendungen oder je nach technischem Umfeld (Fabrik, Simulation, Systemtest, Demo, Branche etc.).

In einem einfachen, gut messbaren Fall wird als eine Kenngrö-ße für eine Kommunikations-Ressource eine Bandbreite, eine typische Übertragungsdauer und/oder ein Jitter (Schwankung der Übertragungsdauer) verwendet, und für eine Kenngröße für die Hardware-Ressourcen können die Rechenleistung, ein Speicherplatz oder eine spezifische Funktionalität (z.B. das Vorhandensein von zusätzlichen Kernen) verwendet werden.

Ein Ausführungsbeispiel des erfindungsgemäßen Verfahrens wird nachfolgend anhand der Zeichnungen erläutert. Es dient gleichzeitig der Erläuterung einer erfindungsgemäßen Anordnung.

Dabei zeigen:
- Figur 1:: eine Verkettung von Anwendungen bzw. Funktionen und Kommunikationskanälen in einer von einem Datensignal durchlaufenen Gesamtstrecke zwischen einer Datenquelle und einer Datensenke,
- Figur 2:: in schematischer Darstellung ein Nachrichtentelegramm als Datensignal inklusive einer Deadline als Kenngröße,
- Figur 3:: eine schematische Darstellung des Aufbaus einer Hardware-Ressourcen mit einer Funktion als Anwendung,
- Figur 4:: ein einfaches Beispiel für einen Eventhandler zum Verarbeiten der Nutzdaten (Pilot) eines Nachrichten Telegramms (Datensignal), und
- Figur 5:: ein Diagramm zur Illustration des Programmablaufs zur Überwachung der Kenngröße (Deadline).

Bei einer verteilten industriellen Automatisierungsanordnung sollen Anwendungen und deren Teile automatisch und basierend auf "Constraints" auf Hardware-Ressourcen (Recheneinheiten, Computer, Steuerungen, Server, Edge-Geräte etc.), die vernetzt sind, geladen werden. Die Constraints sind statische quantifizierbare Kenngrößen, wie beispielsweise eine maximal erlaubte Reaktionszeit oder Durchlaufzeit bzw. "Zielzeit" ("Deadline") eines Datensignals (hier: Nachrichtentelegramm). Dabei kann während des Durchlaufs des Datensignals dessen Inhalt auch verändert werden; in der gegenständlichen Erörterung geht es primär um eine Gesamt-Reaktionszeit des Gesamtsystems (Gesamtstrecke) auf ein Ereignis (erzeugt durch eine Datenquelle, z.B. Sensor) und einer Reaktion zu einer Datensenke (z.B. Aktor). Dies betrifft also beispielsweise Änderungen von Ausgangswerten (Aktoren) basierend auf einer Reaktion ausgelöst durch eine Eingangswertänderung (Sensoren).

Nach dem Laden, also beispielsweise nach einer Inbetriebnahme der Automatisierungsanordnung oder eines Teils davon, wird dann die Einhaltung der Constraints permanent überwacht. Werden Constraints nicht eingehalten, werden entsprechende Anwendungen oder Anwendungsteile neu auf die zur Verfügung stehenden Hardware-Ressourcen aufgeteilt. Neben diesem Aspekt des Deployments, also der Verteilung der Anwendungen auf die verfügbaren Hardware-Ressourcen, wird im hier betrachteten Deployment die Konfigurierung der Kommunikations-Ressourcen betrachtet, also die Einrichtung und Parametrierung von Kommunikationsverbindungen (z.B. "Kanäle") zum vernetzten Betrieb der Anwendungen (Funktionen etc.) und zur Anbindung an die industrielle Hardware (Sensoren, Aktoren und andere Datenquellen und -senken).

Die Organisation oder Aufteilung, also das Deployment, erfolgt basierend auf den Eigenschaften oder Leistungsdaten (Kapazitäten, Fähigkeiten, Kenngrößen oder kurz "Capabilities") der zur Verfügung stehenden Hardware bzw. Ressourcen. Diese können z.B. Charakteristiken der CPU, Arbeitsspeicher, Qualität der Netzwerkverbindungen oder aktuelle CPU-Auslastung (durch Systemprozesse oder Dritt-Software - wie z.B. andere Anwendungen oder 3rd-Party Anwendungen) sein.

Ressourcen werden dabei in drei Kategorien unterteilt:
1. Exklusiv für die gegenständliche Automatisierungslösung reservierte Ressourcen: Auf diesen Ressourcen wird nur die für die Automatisierungslösung erforderliche Software ausgeführt. Dies beinhaltet die Möglichkeit, mit Hilfe von Prozessprioritäten maximale Ausführungszeiten in gewissem Rahmen zu garantieren.
2. Offene Ressourcen: Auf diesen Ressourcen kann auch Dritt-Software ausgeführt werden. Dadurch wird eine Vorhersagbarkeit von Ausführungszeit (deutlich) erschwert oder sogar unmöglich.
3. Geschlossene Systeme ohne Scheduler/Betriebssystem: Auf Kleinstgeräten, wie Mikrocontrollern, wird das Anwenderprogramm oft ohne Betriebssystem ausgeführt. Die Quellen für Programmunterbrechungen können hier deutlich reduziert, bzw. im Extremfall sogar eliminiert werden, was zu einer deutlichen Reduzierung von Jittern bzw. zu einer konstanten Ausführungszeit führen kann..

In den ersten beiden Kategorien muss eine kontinuierliche Überwachung der Ausführungszeit während der kompletten Laufzeit erfolgen. Bei der dritten Kategorie kann eine Überwachung der Ausführungszeit zur Laufzeit entfallen, wenn die jeweilige Ausführungszeit als konstant angenommen werden kann..

Wenn im Folgenden die komplette Automatisierungsanwendung (Businesslogik & Hardwareanbindung) oder Teile dieser geändert werden, muss der Anwender keine erneute Dimensionierung des Systems vornehmen. Stattdessen werden die Constraints bzw. deren Einhaltung weiter überwacht und es findet ggf. eine neue Zuteilung oder Verteilung von Anwendungen bzw. Anwendungsteilen auf die Ressourcen statt.

Die Aufteilung der Anwendungen oder Programmteile auf die zur Verfügung stehenden Hardware-Ressourcen (incl. Betriebssysteme, Firmware, Laufzeitumgebungen - Runtime Environments) ist ein Optimierungsproblem, bei dem die Anforderungen der auszuführenden Anwendungen oder Funktionen oder Kommunikationsverbindungen auf die Leistungsdaten der verfügbaren Ressourcen abgebildet oder umkonfiguriert werden müssen, so dass möglichst alle Constraints eingehalten werden. Weitere Optimierungsziele können mitberücksichtigt werden, beispielsweise eine Kostenoptimierung, eine Optimierung hinsichtlich möglichst geringer Ausfallwahrscheinlichkeit o.ä.

Für die Optimierungsaufgabe bedeutet dies:
- Es ist zu erwarten, dass in vielen Fällen nicht die theoretisch mögliche optimale Aufteilung (globales Optimum) gefunden wird.
- Es gibt Zustände, in der keine Aufteilung gefunden wird bzw. gefunden werden kann, die die Einhaltung der Constraints garantiert: In diesem Fall muss der Anwender mehr Hardware-Ressourcen zur Verfügung stellen oder beispielsweise andere Netzwerk-Ressourcen für Netzwerkverbindungen bereitstellen (z.B. mehr Bandbreite via TSN - Time Sensitive Networks).

Des Weiteren wird die Abhängigkeit der Automatisierungslösung zur Hardware aufgelöst. Der Anwender kann unter Beibehaltung der gleichen Software den Einsatz und die Art der Hardware bzw. Hardware-Ressourcen wählen (z.B. die Verwendung von freier oder freigebbarer Hardware in demselben oder aus anderen Anlagenteilen).

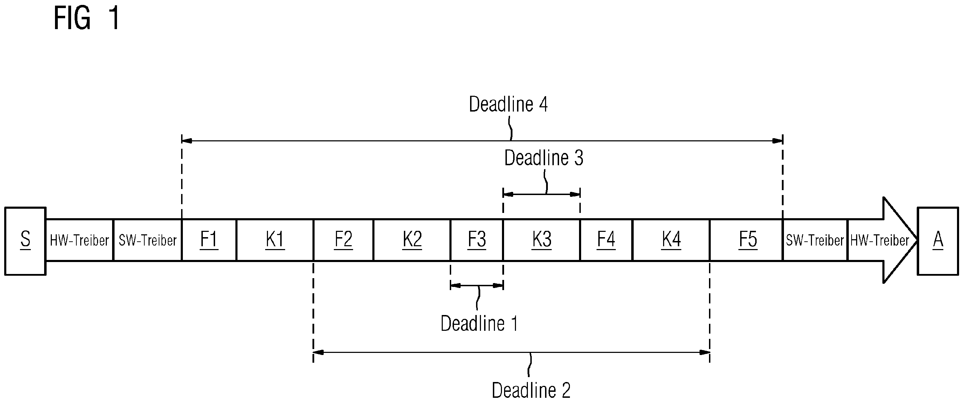

Die Figur 1 zeigt eine Verkettung von Anwendungen bzw. Funktionen (F1, ..., F5) und Kommunikationskanälen in einer von einem Datensignal durchlaufenen Gesamtstrecke. Der wichtigste Constraint zur Beschreibung eines solchen Echtzeitsystems ist die maximal erlaubte Ausführungszeit bzw. Nachrichtenlaufzeit. Diese kann im beschriebenen System fest für eine bzw. mehrere (Rechen-) funktionen (F1, ..., F5) (auch Funktionen oder Anwendungen genannt) und den dazwischen liegenden Kommunikationsverbindungen (z.B. Kommunikationskanäle) (K1, ..., K4) bei der Programmerstellung definiert werden. Die in der Figur 1 links- bzw. rechts befindlichen HW- & SW-Treiber werden in diesem System nicht berücksichtigt, da hier die Annahme getroffen wird, dass die Latenz in diesen Knoten vergleichsweise konstant und bekannt ist und somit eine typische Latenz angenommen bzw. vernachlässigt werden kann. Dies ist auch in bisherigen Systemen üblich, da eine messtechnische Überwachung, beispielsweise durch ein Oszilloskop, sehr aufwändig und meist unnötig ist.

In der Figur werden als zu überwachende Kenngrößen die Durchlaufzeiten eines Datensignals des Sensors S zum Aktor A betrachtet, wobei für einige Teilstrecken maximale Zielzeiten Deadline 1, 2 und 3 als Grenzwerte für den Wert der Signallaufzeit definiert sind und zusätzlich die Zielzeit Deadline 4 für die Gesamtstrecke, die aus den Funktionen F1, ..., F5 als Anwendungen und aus den Kommunikationsverbindungen K1, ..., K4 gebildet ist.

Im Kontext dieses Beispiels werden die erlaubten Durchlaufzeiten, also die Grenzwerte, als Kenngröße oder Constraint berücksichtigt, indem diese zu einer Startzeit addiert werden, so dass sich eine erlaubte Zielzeit, nämlich die jeweilige Deadline, als einzuhaltender Wert ergibt. Kommt das Signal vor dieser Deadline am nächsten Messpunkt an, ist bezüglich der betrachteten Teil- oder Gesamtstrecke alles in Ordnung, anderenfalls gilt der Grenzwert als verfehlt.

Die Vorbedingung, um den Constraint der maximal erlaubten Nachrichtenlaufzeit über einen oder mehreren unterschiedliche Rechenknoten bzw. Kommunikationskanälen hinweg zu überwachen, ist, dass die Uhrzeit aller dieser Knoten synchronisiert ist (z.B. mittels eines NTP- oder PTP-Protokolls).

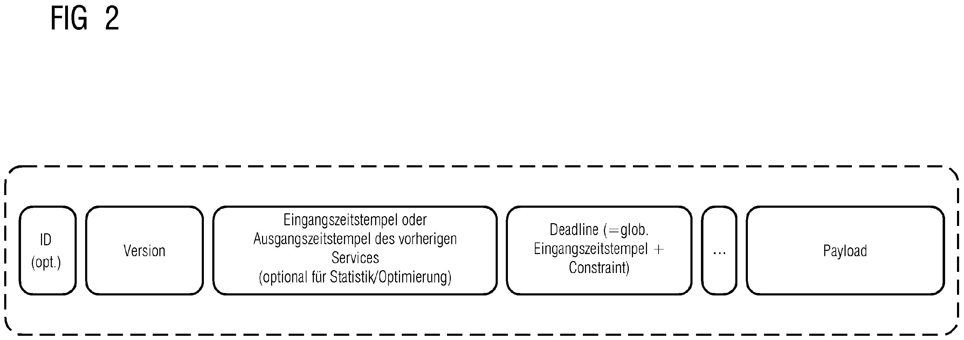

Die Überwachung der maximal erlaubten Ausführungszeit besteht aus zwei oder optional drei Komponenten:
1. Bestimmung einer Deadline (absolute Zeit):
   Die Deadline wird im Anfangsknoten der zu überwachenden Teilstrecke bestimmt. Hier wird die aktuelle Systemzeit zu Beginn der jeweiligen Teilstrecke gemessen und mit der Kenngröße (Constraint) der maximal erlaubten Ausführungszeit addiert. Daraus ergibt sich die Deadline. Beispiele von Deadline-Angaben über eine bzw. mehrere Funktionen bzw. Kommunikationskanäle sind in der Figur 1 dargestellt. Um diesen Algorithmus anwenden zu können, muss die maximal erlaubte Nachrichtenlaufzeit zu Beginn der Teilstrecke bekannt sein und die jeweilige Deadline über die gesamte Teilstrecke mit dem jeweiligen Payload propagiert, also weitergemeldet, werden.
2. Überwachung der Deadline:
   Die jeweilige Deadline wird über die gesamte Teilstrecke in dem Nachrichtentelegram versendet. Jeder Rechenknoten überprüft sowohl nach dem Paketeingang des Datenpakets mit dem Datensignal, z.B. einem Messwert, als auch vor dem Ausgang des jeweiligen Paketes mit dem ggf. geänderten Datensignal, ob die aktuelle Systemzeit kleiner ist, als die vom Eingangsknoten berechnete Deadline (Grenzwert). Um diese Funktionalität zu ermöglichen, wird im ersten Knoten der für die Deadline relevanten Teilstrecke die aktuelle Zeit gemessen und mit der Deadline (max. zulässige Ausführungszeit der betrachteten Strecke oder Teilstrecke) addiert. Diese absolute Zeit wird als Deadline neben den eigentlichen Nutzdaten in der Nachricht von einer Funktion zur nächsten über den jeweiligen Kommunikationskanal verschickt (siehe Figur 2). Die ermittelte tatsächliche Laufzeit ist dabei der aktuelle Wert der Kenngröße (hier: Durchlaufzeit) auf der jeweils betrachteten Teil- oder Gesamtstrecke, und die "Deadline" ist der zu beachtende Grenzwert.
3. Optionale Analyse:
   Zusätzlich kann in einer Nachricht auch der Eingangs- bzw. Ausgangszeitstempel versendet werden. Dies kann dann zur Analyse verwendet werden, um beispielsweise die Nachrichtenlaufzeit und den Jitter des Kommunikationskanals oder der vorherigen Anwendung/Funktion incl. Kommunikationskanal zu bestimmen.

Die Überwachung soll dabei nicht in dem Teil der Funktion oder Anwendung geschehen, die vom Anwender programmiert wurde, sondern in der "Runtime", also der vom Hersteller bereitgestellten Laufzeitumgebung, in der die vom Anwender programmierte Funktion aufgerufen wird. Alternativ kann die Überwachung auch als zusätzliche Funktion in ein Betriebssystem integriert sein.

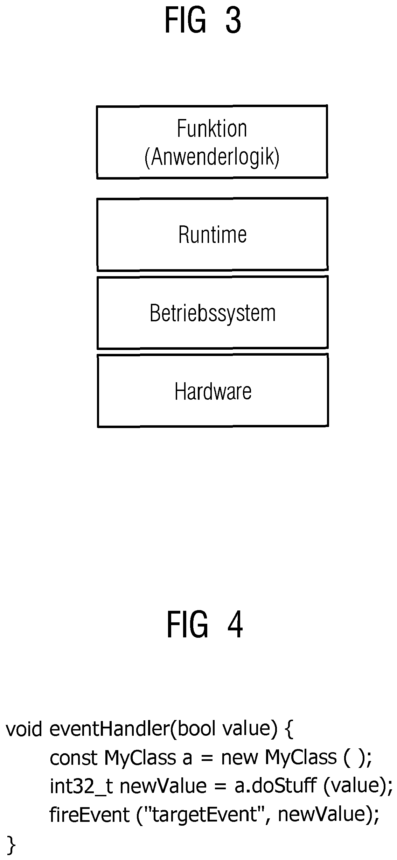

Die zugrunde liegende Architektur mit Hardware (Hardware-Ressource), Betriebssystem, Laufzeitumgebung und Funktion (Anwenderlogik, Anwendung) ist in der Figur 3 dargestellt.

Die Funktion gibt dabei nur die Nutzdaten und Metainformation (wie Variablennamen oder Informationen zur Nachrichtenzustellung) an die Laufzeitumgebung (im Folgenden Runtime genannt) weiter. Die Runtime reichert diese Information dann um die in Figur 2 beschriebenen Informationen (Deadline, ggf. Zeitstempel) an.

Die Runtime ruft beim Empfang einer neuen Nachricht vom Betriebssystem einen Event-Handler in der Anwenderlogik auf. Dieser Eventhandler bekommt lediglich die Nutzdaten (Payload) übergeben.

Die Figur 4 zeigt einen beispielhaften Eventhandler, der den Wert "value" erhält, intern die vom Anwender programmierte Businesslogik ausführt und den Wert "newValue" mit Hilfe der Methode "fireEvent" an die Runtime zurückschickt. Man sieht, dass das Datensignal, hier das Datum "value", beim Durchlauf durch die Teil- oder Gesamtstrecke verändert werden kann (hier dann als Datum "newValue").

Beim initialen Deployment existieren im Stand der Technik keine Algorithmen, um mit vertretbarem Aufwand eine genaue Vorhersage treffen zu können, ob gegebene zeitliche Constraints (Kenngrößen), z.B. "Worst Case Execution Time", für ein gegebenes Programm zuverlässig eingehalten werden können.

In bestehenden Anwendungen wird versucht, dies durch Erfahrung des Anwenders und Tests während der Inbetriebnahme sicherzustellen.

Im vorliegenden System sollen im ersten Schritt Auslastungsdaten der Hardware, wie zum Beispiel freie CPU- & RAM-Kapazität, als Grundlage für die Leistungsdaten für die Planung des Deployments genutzt werden.

Grundsätzlich bestimmen die Auslastungsdaten und Angaben über die Leistungsfähigkeit (z.B. Taktrate, Architektur, Speicher, Betriebssystem, Bandbreite, ...) die verfügbaren Leistungsdaten einer Hardware-Ressource bzw. einer darauf installierten Laufzeitumgebung oder einer Kommunikations-Ressource. Die Leistungsdaten können auch anderweitig ermittelt werden, beispielsweise durch den Ablauf von Test-Anwendungen (Prüfroutinen) oder durch die kontrollierte Übertragung von Test-Datenpaketen.

Ein weiterer erheblicher Faktor in einem Micro-Servicebasierten System sind die Nachrichtenlaufzeiten zwischen den einzelnen Services (hier: Funktionen oder Anwendungen). Diese können massiv reduziert werden, wenn zwei Services auf einem gemeinsamen Hardwareknoten ausgeführt werden, wenn z.B. die Kohäsion/Kopplung zweier Services hoch ist. Je mehr Router und Switches eine Nachricht passieren muss, um vom Sender zum Empfänger zu gelangen, desto höher wird auch die Nachrichtenlaufzeit. Um diese Netzwerktopologie mit einzubeziehen, können im ersten Schritt Technologien wie LLDP (Link Layer Discovery Protocol) verwendet werden. In einer weiteren Evolutionsstufe kann das gegenständliche System auch Technologien wie TSN (Time Sensitive Networking) einsetzen, um Bandbreiten auf dedizierten Kommunikations-Ressourcen für Kommunikationsverbindungen zu reservieren und damit zu garantieren.

Es ist dennoch nach wie vor zu erwarten, dass im beschriebenen System nach dem Deployment eine Phase der Inbetriebnahme folgt, in der das Risiko auf Überschreitungen von Deadlines erhöht ist, da nicht alle Wechselwirkungen zwischen den Services bzw. der Hardware bekannt sind. Trotzdem stellt der Deployment-Algorithmus eine deutliche Vereinfachung für einen Programmierer eines verteilten Rechensystems dar, da der Anwender die Services nicht explizit einer Hardware zuweisen muss und die Auslastung der Hardware-Komponenten bzw. die Netzwerktopologie nicht im Detail kennen muss.

Sobald in einer der Anwendungen bzw. der unterlagerten Laufzeitumgebung festgestellt wird, dass ein Service eine Deadline nicht eingehalten hat und somit ein tatsächlicher Wert einer Kenngröße den zugeordneten Grenzwert verfehlt, wird ein Fehler-System-Event versendet.

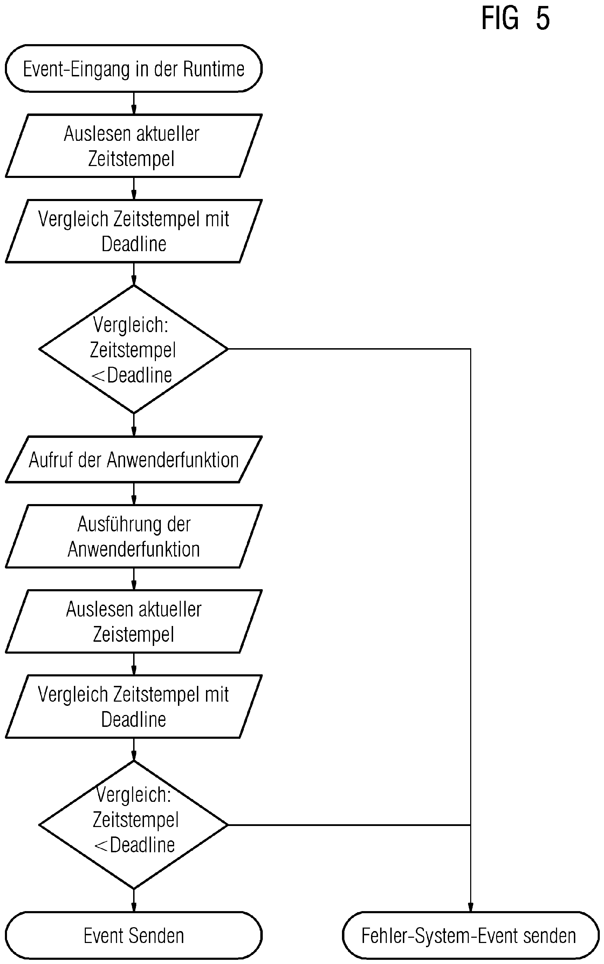

Ein möglicher Programmablauf für die Überprüfung der Deadlines in der Laufzeitumgebung ist in Figur 5 dargestellt. Dort wird eine Anwendung (dort Anwenderfunktion genannt) hinsichtlich eines Grenzwertes (Deadline) überwacht, wobei im Fehlerfall ein Fehler-System-Event generiert wird, welches die Neuorganisation des Deployments initiiert.

Der Nutzer soll die Möglichkeit haben, die Systemreaktion auf ein solches Fehler-System-Event zu definieren. Mögliche Reaktionen auf Überschreitung einer Deadline sind:
- Eine vom Anwender definierte Funktion wird ausgeführt.
- Die komplette Anlage wird angehalten bzw. in einen sicheren Zustand überführt.
- Der Anwender wird über das Überschreiten einer Deadline informiert und die Anlage läuft weiter.
- Es wird eine neue Zuordnung von Softwarefunktionen und Rechenknoten berechnet und durchgeführt (Re-Deployment).

Im letzten Fall wird unterschieden zwischen folgenden Arten von Re-Deployment:
o Sofort/Weich **→** Blue-Green-Deployment (z.B. mit Event-Sourcing & Apache-Kafka für Stateful Services, direkt für Stateless Services)
o Sofort/Hart: Anhalten der Services und unmittelbares Re-Deployment
o Geplant: Weiterhin Sammeln von Daten für Optimierung und späteres Re-Deployment, wenn Anlage in einen Wartungsmodus oder Betriebspause geschaltet werden kann, also einen Zustand, in dem Unterbrechungen in der Programmausführung toleriert werden. Dies kann vom Anwender oder vom Produktionssystem vorgegeben werden.

Für die Beeinflussung der Deploymentstrategie sind insbesondere die Ausführungszeiten der Services/Anwendungen/Funktionen und die Nachrichtenlaufzeiten der Kommunikationskanäle relevant.

Diese können wie folgt analysiert werden:
- Ausführungszeiten im Service: Wird in jedem Service der Eingangszeitstempel beim Empfang eines Events und der Ausgangszeitstempel beim Versand eines Events gespeichert, so kann daraus die Ausführungszeit eines Services berechnet werden (Min, Max, Histogramm,...). Diese kann im Folgenden zur Optimimierung des Schedulings (=Re-Deployment) verwendet werden. Diese Information kann dann über einen nicht zwingend echtzeitfähigen Kanal an eine zentrale Komponente übermittelt werden, die die Deploymentstrategie beeinflusst.
- Nachrichtenlaufzeit: Wird der Ausgangszeitstempel zusätzlich im Header eines Events oder Datenpakets versendet, kann bei Empfang eines Events/Datenpaktes/Datentelegramms die jeweilige Nachrichtenlaufzeit errechnet werden. Diese kann ebenfalls für eine nachfolgende Optimierung verwendet werden.

Anders als zuvor beschrieben können nach dem initialen Deployment statistische Daten für die Ausführungs- und Kommunikationslatenzen und andere Kenngrößen eines Systems zur Verfügung stehen. Diese können dann im weiteren Verlauf verwendet werden, um das System zu optimieren. Folgende Optimierungsvektoren sind hier möglich:
- Vermeidung von Überlast-Situationen auf einzelnen Hardwareknoten durch gleichmäßige Auslastung. Dadurch wird das Risiko einer sporadischen Überschreitung von Latenzschranken reduziert.
- Optimierung der Kommunikationsbeziehungen durch Re-Deployment von Services, die eine direkte Kommunikationsverbindung mit hohen Latenzen, Jitter oder andere nachteilige Eigenschaften haben.

Bisherige Automatisierungslösungen werden i.d.R. nach dem Bottom-Up Ansatz erstellt. Das heißt: Zu Beginn wird die einzusetzende Hardware bestimmt. Im Folgenden wird dann die Software auf diese bestimmte Hardware zugeschnitten. Bei einer späteren Änderung der Hardwarekonfiguration entstehen dann oft auch (größere) Aufwände, um die Software auf die neue Hardware abzustimmen.

Für diesen Ansatz müssen Anwender bzw. Entwickler von echtzeitkritischen Applikationen sowohl die Software als auch die zur Verfügung stehenden Ressourcen und deren Auslastung inkl. die Systemauslastung durch Fremdsoftware kennen oder durch Messung ermitteln. Dies kann ggf. sehr aufwändig und dadurch kostenintensiv und fehleranfällig sein. Häufig ist das Resultat, dass (weitaus) mehr Ressourcen eingesetzt werden, als eigentlich nötig, um bei Auslastungsspitzen dennoch die gegebenen Constraints einhalten zu können. Zudem muss bei Änderungen von Teilen des Gesamtsystems eine neue Beurteilung stattfinden. Dynamisch konfigurierbare Automatisierungsprogramme verstärken diese Unsicherheit und die daraus resultierenden Kosten weiter. Dieser Effekt wird weiter erhöht, wenn zu den Änderungen von System und/oder Anwendungen (Applikationen) personelle Veränderungen bestehen. Dabei muss ggf. zuerst (aufwändig) Know-How aufgebaut werden.

Die Idee der skizzierten Lösung ist es, die Aufteilung (Deployment) zu automatisieren und dadurch Zeit und Risiko für den Anwender zu reduzieren und bei einer Überschreitung von Latenzschranken oder dergleichen die Aufteilung von Software und Hardware und die Konfiguration der Kommunikation so anzupassen, dass die Vorgaben wieder eingehalten werden.

## Patentansprüche

1. Verfahren zur Verteilung von Anwendungen (F1, ..., F5) und zur Konfiguration von Kommunikationsverbindungen (K1, ..., K4) in einer verteilten industriellen Automatisierungsanordnung mit einer Anzahl vernetzter Hardware-Ressourcen für die Anwendungen (F1, ..., F5) und Kommunikations-Ressourcen für die Kommunikationsverbindungen (K1, ..., K4),
wobei eine Gesamtstrecke zwischen einem ersten Steuerelement, insbesondere einem Sensor (S), und einem zweiten Steuerelement, insbesondere einem Aktor (A), aus einer Anzahl Anwendungen (F1, ..., F5) auf den Hardware-Ressourcen und den Kommunikationsverbindungen (K1, ..., K4) auf den Kommunikations-Ressourcen gebildet wird, wobei die Gesamtstrecke aus einer Anzahl von Teilstrecken aus den Anwendungen (F1, ..., F5) und Kommunikationsverbindungen (K1, ..., K4) gebildet wird,
wobei die Gesamtstrecke von einem Datensignal durchlaufen wird, und wobei für einen Durchlauf des Datensignals durch die Gesamtstrecke ein Grenzwert einer Kenngröße, insbesondere eine maximale Ausführungs- oder Reaktionszeit, vorgegeben ist,
**dadurch gekennzeichnet,**
**dass** in einem ersten Schritt die aktuellen Werte der Kenngröße für zumindest einen Durchlauf des Datensignals auf der Gesamtstrecke und zumindest einer der Teilstrecken registriert werden,
**dass** in einem zweiten Schritt die Leistungsdaten zumindest eines Teils der Hardware-Ressourcen und/oder der Kommunikations-Ressourcen ermittelt werden, und
**dass** in einem dritten Schritt zumindest in dem Fall, in dem zumindest ein tatsächlicher Wert den jeweiligen Grenzwert verfehlt, die Verteilung der Anwendungen (F1, ..., F5) auf die Hardware-Ressourcen und/oder der Kommunikationsverbindungen (K1, ..., K4) auf die Kommunikations-ressourcen neu organisiert wird.

2. Verfahren nach Patentanspruch 1,
**dadurch gekennzeichnet**,
während eines Betriebs der Automatisierungsanordnung ein absoluter oder ein in Bezug auf die Leistungsdaten relativer Grad der Belegung zumindest einer der Ressourcen durch die jeweilige Anwendung und/oder die jeweilige Kommunikationsverbindung ermittelt, gelernt oder gespeichert wird.

3. Verfahren nach einem der vorhergehenden Patentansprüche, **dadurch gekennzeichnet, dass** für verschiedene Typen von Hardware-Ressourcen und/oder Kommunikations-Ressourcen der absolute oder relative Grad der Belegung durch den jeweiligen Typ der Anwendung oder Kommunikationsverbindung jeweils getrennt ermittelt, gelernt oder gespeichert wird.

4. Verfahren nach einem der vorhergehenden Patentansprüche,
**dadurch gekennzeichnet,**
**dass** in dem dritten Schritt für die Neuorganisation die bei einer möglichen oder beabsichtigten Verschiebung einer Anwendung von einer ersten Hardware-Ressource zu einer zweiten Hardware-Ressource oder bei einer möglichen oder beabsichtigten Verschiebung einer Kommunikationsverbindung von einer ersten Kommunikations-Ressource zu einer zweiten Kommunikations-Ressource die dabei jeweils frei werdenden Belegung der ersten Hardware-Ressource bzw. der ersten Kommunikations-Ressource für eine mögliche oder beabsichtige Verschiebung einer dritten Anwendung oder einer dritten Kommunikationsverbindung berücksichtigt werden.

5. Verfahren nach einem der vorhergehenden Patentansprüche,
**dadurch gekennzeichnet,**
**dass** in dem dritten Schritt eine für die Neuorganisation benötigte Zeit anhand von vorgegebenen Richtwerten oder anhand von ermittelten, gelernten oder gespeicherten Werten für die benötigte Zeit aus vorhergehenden Installationsvorgängen oder Neu-Organisationen für eine Entscheidung darüber verwendet werden, ob die Neuorganisation während eines Betriebs der Automatisierungsanordnung oder während einer Betriebspause der Automatisierungsanordnung im Lichte einer vorgegebenen maximalen Verzögerung während des laufenden Betriebs stattfinden kann, wonach die Neuorganisation entweder unverzüglich oder erst in einer folgenden Betriebspause erfolgt.

6. Verfahren nach einem der vorhergehenden Patentansprüche,
**dadurch gekennzeichnet,**
**dass** vor eine Anwendung der neuen Organisation der Verteilung der Anwendungen (F1, ..., F5) und/oder der Kommunikationsverbindungen (K1, ..., K4) der neu zu erwartende Wert für die Kenngröße im Wege der Simulation der Anwendungen (F1, ..., F5) und der Kommunikationsverbindungen (K1, ..., K4) in Bezug auf einen Ablauf der Anwendungen (F1, ..., F5) bzw. der Kommunikationsverbindungen (K1, ..., K4) auf den dafür jeweils eingeplanten Hardware-Ressourcen bzw. Kommunikations-Ressourcen simuliert wird und die Neuorganisation nur bei einer erfolgreichen Simulation in Bezug auf die Einhaltung des Grenzwertes oder der Grenzwerte erfolgt.

7. Verfahren nach einem der vorhergehenden Patentansprüche,
**dadurch gekennzeichnet,**
**dass** bei einem oder jedem Betrieb der Kommunikationsanordnung die tatsächlichen Werte für die Durchläufe des Datensignals durch die Gesamtstrecke und durch eine Vielzahl von Teilstrecken jeweils bezogen auf die tatsächlich verwendeten Hardware-Ressourcen bzw. Kommunikationsressourcen mittels eines Systems zum Maschinenlernen, insbesondere durch ein neuronales Netz, trainiert werden, wobei das trainierte System zum Maschinenlernen zur Ermittlung einer optimierten Organisation der Anwendungen (F1, ..., F5) bzw. Kommunikationsverbindungen (K1, ..., K4) auf den aktuell verfügbaren Hardware-Ressourcen bzw. Kommunikations-Ressourcen verwendet wird.

8. Verfahren nach einem der vorhergehenden Patentansprüche,
**dadurch gekennzeichnet,**
**dass** als eine Kenngröße für eine Kommunikations-Ressource eine Bandbreite, eine Übertragungsdauer oder ein Jitter verwendet wird, und/oder dass für eine Kenngröße für eine Hardware-Ressourcen eine Rechenleistung, ein Speicherplatz oder eine spezifische Funktionalität verwendet wird.

9. Anordnung zur Verteilung von Anwendungen (F1, ..., F5) und zur Konfiguration von Kommunikationsverbindungen (K1, ..., K4) in einer verteilten industriellen Automatisierung mit einer Anzahl vernetzter Hardware-Ressourcen für die Anwendungen (F1, ..., F5) und Kommunikations-Ressourcen für die Kommunikationsverbindungen (K1, ..., K4),
**dadurch gekennzeichnet,**
**dass** die Anordnung ein erstes Computerprogramm, insbesondere eine erste Firmware- oder Betriebssystemroutine, zum Zeitstempeln eines Datensignals an einer ersten Komponente der Automatisierungsanordnung umfasst,
**dass** die Anordnung ein zweites Computerprogramm, insbesondere eine zweite Firmware- oder Betriebssystemroutine, zum Auslesen und Auswerten des Zeitstempel des Datensignals an einer zweiten Komponente der Automatisierungsanordnung umfasst, und
**dass** die Anordnung ein drittes Computerprogramm, insbesondere eine dritte Firmware- oder Betriebssystemroutine, zur Organisation der Verteilung von Anwendungen (F1, ..., F5) und/oder Kommunikationsverbindungen (K1, ..., K4) nach einem Verfahrens gemäß einem der Patentansprüche 1-8 eingerichtet ist.
